(19) **Europäisches Patentamt European Patent Office Office européen des brevets**

(11) **EP 4 128 814 B1**

(12) **FASCICULE DE BREVET EUROPEEN**

(45) Date de publication et mention de la délivrance du brevet:
**07.05.2025 Bulletin 2025/19**

(21) Numéro de dépôt: **21732361.7**

(22) Date de dépôt: **24.03.2021**

(51) Classification Internationale des Brevets (IPC):
**H04R 3/02** *(2006.01)*

(52) Classification Coopérative des Brevets (CPC):
**H04R 3/02**

(86) Numéro de dépôt international:
**PCT/FR2021/050502**

(87) Numéro de publication internationale:
**WO 2021/198587 (07.10.2021 Gazette 2021/40)**

(54) **PROCÉDÉ DE CONTRÔLE DE RETOUR ACOUSTIQUE AVEC FILTRAGE ADAPTATIF**

VERFAHREN ZUR STEUERUNG AKUSTISCHER RÜCKKOPPLUNGEN MIT ADAPTIVER FILTERUNG

ACOUSTIC FEEDBACK CONTROL METHOD WITH ADAPTIVE FILTERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2020 FR 2003234**

(43) Date de publication de la demande:
**08.02.2023 Bulletin 2023/06**

(73) Titulaire: **Arteac-Lab**
**13001 Marseille (FR)**

(72) Inventeurs:
• **HERZOG, Philippe**
  **13360 Roquevaire (FR)**
• **LAMBOURG, Christophe**
  **13007 Marseille (FR)**

(74) Mandataire: **Germain Maureau**
**12, rue Boileau**
**69006 Lyon (FR)**

(56) Documents cités:
**WO-A1-96/23384**

• **FRANK WEFERS: "Partitioned convolution algorithms for real-time auralization", 13 May 2015 (2015-05-13), XP055566796, Retrieved from the Internet <URL:http://publications. rwth-aachen.de/record/466561/files/466561.pdf? subformat=pdfa> [retrieved on 20190311]**

**Description**

La présente invention concerne le domaine du traitement du signal pour l'annulation d'un écho associé à un signal acoustique, et en particulier pour lutter contre l'effet Larsen dans les systèmes de diffusion sonore.

Il est connu de modéliser une fonction de transfert entre un signal de sortie u d'un dispositif de diffusion sonore et un signal de retour acoustique x, généré par l'environnement à partir du signal de sortie u, pour estimer une contribution 2 dudit signal de retour acoustique x à un signal capté y par un microphone ; cette estimation permet d'en déduire par différence entre y et x̂ une estimation du signal source s, purifié du signal de retour acoustique x généré par le ou les échos.

Il est en particulier connu de modéliser la fonction de transfert avec un filtre adaptatif, dont la réponse impulsionnelle finie, est partitionnée dans le temps de manière non uniforme.

Les procédés connus, basés sur l'utilisation d'un filtre adaptatif dont la réponse impulsionnelle est partitionnée dans le temps de manière non uniforme, obligent à calculer explicitement la réponse impulsionnelle dans le domaine temporel, ce qui augmente la complexité algorithmique. Dans le document D1, « Partioned convolution algorithms for real-time auralization », Frank Wefers décrit un procédé adaptatif de contrôle de retour de contrôle acoustique dans un signal de sortie d'un dispositif de diffusion sonore dans lequel le partitionnement n'est pas le même pour l'application du filtre d'une part et pour l'adaptation du filtre d'autre part. Comme complément d'information, le document WO 96/23384 A1 divulgue le contexte technique de la demande.

L'invention a donc pour but de proposer une solution à tout ou partie de ces problèmes.

A cet effet, la présente invention concerne un procédé adaptatif de contrôle de retour acoustique dans un signal de sortie d'un dispositif de diffusion sonore, le dispositif de diffusion sonore recevant en entrée un signal d'entrée, le signal d'entrée étant une fonction d'un signal capté par un microphone et d'une estimation d'un signal de retour acoustique, le signal capté étant égal à la somme d'un signal source acoustique et du signal de retour acoustique, l'estimation du signal de retour acoustique comprenant les étapes suivantes :

- déterminer un filtre, une réponse impulsionnelle du filtre étant partitionnée en une partition comprenant une pluralité de blocs dans le domaine temporel, chaque bloc de la pluralité comprenant un nombre d'échantillons de la réponse impulsionnelle, ledit nombre d'échantillons étant égal à une taille dudit bloc, chaque bloc de la pluralité de blocs comprenant un nombre de sous-blocs, le nombre de sous-blocs étant supérieur ou égal à un, l'étape de détermination comprenant en outre les étapes suivantes :

- pour chaque sous-bloc de chaque bloc de la réponse impulsionnelle calculer une transformée fréquentielle à partir dudit sous-bloc;
- répéter les étapes suivantes :

  - appliquer au signal de sortie le filtre en utilisant la transformée fréquentielle de chaque sous-bloc de chaque bloc de la réponse impulsionnelle, pour obtenir l'estimation du signal de retour acoustique;
  - adapter le filtre, en mettant à jour la transformée fréquentielle de chaque sous-bloc de chaque bloc de la réponse impulsionnelle en fonction du signal de sortie et du signal d'entrée,

caractérisé en ce que :
l'adaptation du filtre est réalisée par une mise à jour de la transformée fréquentielle calculée et adaptée sur la base de la même partition que celle déterminée à l'étape de détermination, et utilisée à l'étape d'application du filtre.

Selon ces dispositions, l'étape d'adaptation du filtre utilise la même partition de la réponse impulsionnelle que celle déterminée à l'étape de détermination et utilisée à l'étape d'application du filtre, ce qui permet d'éviter d'avoir à effectuer les étapes de création, et de calcul à chaque itération du procédé.

Selon un mode de mise en œuvre, l'invention comprend une ou plusieurs des caractéristiques suivantes, seules ou en combinaison techniquement acceptable.

Selon l'invention, la taille d'un bloc est différente d'une autre taille d'au moins un autre bloc.

Selon un mode de mise en œuvre, la transformée fréquentielle est une transformation de Fourier.

Selon un mode de mise en œuvre, chaque sous-bloc dudit bloc a une même taille que les autres sous-bloc dudit bloc.

Selon un mode de mise en œuvre, le calcul de la transformée fréquentielle d'un sous sous-bloc d'un bloc de la réponse impulsionnelle comprend les étapes suivantes :

- créer un sous-bloc concaténé en concaténant ledit sous-bloc avec des échantillons virtuels, de sorte qu'une taille du sous-bloc concaténé est égale à au moins deux fois la taille dudit sous-bloc ;
- calculer la transformée fréquentielle du sous-bloc concaténé créé pour ledit sous-bloc;

Selon un mode de mise en œuvre, la valeur d'au moins un échantillon virtuel est comprise entre -0,5, et 0,5, de préférence égale à 0; de préférence la valeur de tous les échantillons virtuels est égale à 0.

Selon un mode de mise en œuvre, les échantillons virtuels sont placés avant les échantillons du sous-bloc pour créer le sous-bloc concaténé.

Selon un mode de mise en œuvre, la fonction du signal capté et de l'estimation du signal de retour acoustique est égale à une différence entre le signal capté et l'estimation du signal de retour acoustique.

Selon un mode de mise en œuvre, le signal de sortie, le signal d'entrée, comprennent respectivement une pluralité d'échantillons, dans le domaine temporel, chaque échantillon de ladite pluralité d'échantillons correspondant à une valeur, à des instants successifs, du signal de sortie, respectivement du signal d'entrée, et l'étape de détermination comprend en outre les étapes suivantes :

- créer une pluralité de composants, la pluralité de composants comprenant un composant non retardé associé à un bloc non retardé de la partition, et au moins un composant retardé, le composant non retardé comprenant un buffer de sortie non retardé, l'au moins un composant retardé comprenant un buffer de sortie retardé;
- créer une pluralité de buffer source, chaque buffer source étant associé à un bloc de la partition;

et l'étape d'adaptation comprend les étapes suivantes :

- calculer une transformée fréquentielle du contenu du buffer de sortie;
- insérer la transformée fréquentielle dans un buffer circulaire configuré pour contenir un historique des transformées de Fourier calculées lors des dernières itérations, pour un nombre d'itérations déterminé en fonction du nombre de sous-blocs du bloc associé au composant;
- pour chaque buffer source de la pluralité de buffer source, calculer une transformée fréquentielle à partir dudit buffer source;
- mettre à jour la transformée fréquentielle de chaque sous-bloc de chaque bloc de la réponse impulsionnelle à partir du buffer circulaire et de la transformée fréquentielle calculée à partir des buffers source.

Selon un mode de mise en œuvre, chaque composant est respectivement configuré pour recevoir dans ledit buffer de sortie un nombre d'échantillons du buffer de sortie, ledit nombre d'échantillons du buffer de sortie étant égal à deux fois la taille d'un sous-bloc du bloc associé audit composant.

Selon un mode de mise en œuvre, chaque buffer source de la pluralité de buffer source a une taille égale à la taille d'un sous-bloc du bloc associé audit buffer source.

Selon un mode de mise en œuvre, le composant non retardé comprend un premier buffer non retardé et un deuxième buffer non retardé, l'au moins un composant retardé comprenant un premier buffer retardé, et un deuxième buffer retardé, et le procédé comprend les étapes suivantes

- créer une pluralité de buffer FIFO, chaque buffer FIFO étant associé à un bloc de la partition, et ayant une profondeur égale à la taille dudit bloc de la partition, la profondeur définissant un nombre d'échantillons du signal de sortie pouvant être sauvegardés dans ledit buffer FIFO, l'au moins un composant retardé étant associé à un buffer FIFO et au bloc de la partition associé audit buffer FIFO; et l'étape d'adaptation comprend les étapes suivantes :

- à chaque instant sauvegarder l'échantillon correspondant du signal de sortie dans le premier buffer non retardé du composant non retardé, jusqu'à ce que le premier buffer non retardé soit plein;
- dans chaque buffer FIFO de la première pluralité de buffer FIFO, et pour chaque instant, sauvegarder les échantillons du signal de sortie, jusqu'à ce que ledit buffer soit plein, avec au moins un dernier échantillon sauvegardé dans ledit buffer et l'échantillon retardé sauvegardé en premier dans ledit buffer;
- pour chaque composant retardé de la pluralité de composants, à chaque instant suivant l'instant où le buffer FIFO associé audit composant retardé est plein, sauvegarder l'échantillon retardé dudit buffer FIFO dans le premier buffer retardé dudit composant retardé, jusqu'à ce que ledit premier buffer retardé soit plein ;
- pour chaque composant de la pluralité de composants:

  - lorsque le premier buffer est plein, si le deuxième buffer dudit composant est vide, recopier ledit premier buffer dans le deuxième buffer dudit composant, et itérer jusqu'à ce que le premier soit à nouveau plein;
  - si le deuxième buffer dudit composant n'est pas vide, former le buffer de sortie en concaténant le premier et le deuxième buffer dudit composant;

Selon un mode de mise en œuvre, le premier buffer et le deuxième buffer de chaque composant sont respectivement configurés pour recevoir un nombre d'échantillons du buffer, ledit nombre d'échantillons du buffer étant égal à la taille d'un sous-bloc du bloc associé audit composant.

Selon un mode de mise en œuvre, l'étape d'adaptation comprend les étapes suivantes :

- pour chaque buffer source de la pluralité de buffer source, à chaque instant, sauvegarder l'échantillon correspondant du signal d'entrée dans ledit buffer source, jusqu'à ce que ledit buffer source soit plein;
- pour chaque buffer source de la pluralité de buffer source, créer un buffer source concaténé en concaténant ledit buffer source avec des échantillons source virtuels ayant une même valeur d'échantillon source virtuel, de sorte qu'une taille du buffer source concaténé est égale à au moins deux fois la taille dudit buffer source;

et le calcul d'une transformée de Fourier à partir dudit buffer source est réalisé à partir du buffer source concaténé créé pour chaque buffer source de la pluralité de buffer source;

Selon un mode de mise en œuvre, la valeur d'au moins un échantillon source virtuel est comprise entre -0,5, et 0,5, de préférence égale à 0; de préférence la valeur de tous les échantillons source virtuels est égale à 0.

Selon un mode de mise en œuvre, le buffer source concaténé est créé en ajoutant les échantillons sources virtuels avant les échantillons du buffer source de façon à obtenir le buffer source concaténé.

Selon un mode de mise en œuvre, l'étape de mise à jour de la transformée fréquentielle de chaque sous-bloc de chaque bloc de la réponse impulsionnelle à partir du premier buffer circulaire et du deuxième buffer circulaire, est réalisée en appliquant une méthode adaptative dans le domaine fréquentiel.

Selon un mode de mise en œuvre, la méthode adaptative dans le domaine fréquentiel est effectuée par un algorithme, connu par l'homme du métier sous le nom de Fast Block LMS.

Selon un mode de mise en œuvre, d'autres algorithmes adaptatifs plus évolués peuvent être appliqués

Selon ces dispositions, consistant à utiliser différentes tailles de blocs, communes à la convolution et à l'adaptation, des jeux de paramètres d'adaptation doivent être choisis, dont en particulier un coefficient de pas, ces paramètres étant spécifiques à chaque taille des sous-blocs, tout en garantissant la cohérence de l'estimation.

Plusieurs démarches peuvent être suivies pour le choix de ces jeux de paramètres ; il est possible d'obtenir une vitesse de convergence différente en début et en fin de réponse, ce qui peut être favorable en pratique.

Selon un autre aspect l'invention concerne un programme d'ordinateur comprenant un ensemble d'instructions exécutables par un processeur d'un ordinateur, l'ensemble d'instructions étant configuré pour mettre en œuvre les étapes du procédé selon l'une quelconque des revendications précédentes lorsque l'ensemble d'instructions est exécuté par le processeur de l'ordinateur.

Selon encore un autre aspect l'invention concerne un support lisible par un ordinateur, comprenant un ensemble d'instructions exécutables par un processeur de ordinateur, l'ensemble d'instructions étant configuré pour mettre en œuvre les étapes du procédé selon l'un quelconque des modes de mise en œuvre décrit précédemment, lorsque l'ensemble d'instructions est exécuté par le processeur de l'ordinateur.

Pour sa bonne compréhension, un mode de réalisation et/ou de mise en œuvre de l'invention est décrit en référence aux dessins ci-annexés représentant, à titre d'exemple non limitatif, une forme de réalisation ou de mise en œuvre respectivement d'un dispositif et/ou d'un procédé selon l'invention. Les mêmes références sur les dessins désignent des éléments similaires ou des éléments dont les fonctions sont similaires.

[Fig. 1] est une représentation schématique des composants d'un dispositif configuré pour mettre en œuvre le procédé selon l'invention.

[Fig. 2] est une représentation d'un mode de partitionnement d'une réponse impulsionnelle d'un filtre utilisé dans la mise en œuvre du procédé selon l'invention.

[Fig. 3] est une représentation des principaux composants configurés pour la mise en œuvre des différentes étapes de la mise à jour du filtre adapté selon un mode de mise en œuvre du procédé selon l'invention.

[Fig. 4] est une représentation simplifiée d'un logigramme des étapes du procédé selon un mode de mise en œuvre de l'invention.

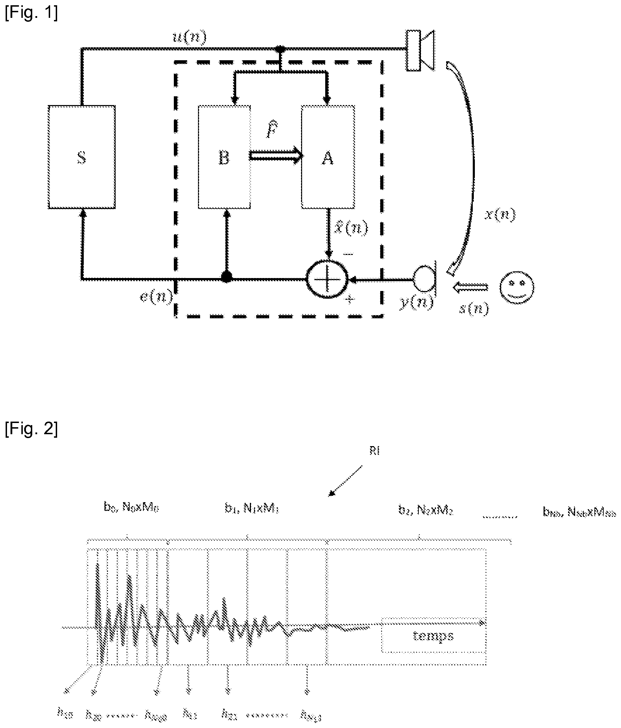

Un système de contrôle du retour acoustique, est souvent appelé aussi système d'AFC selon la terminologie anglo-saxonne désignant un système Acoustic Feedback Cancelation ou anti-Larsen. Le principe général d'un système d'AFC est représenté sur la figure 1.

Par la suite, s(n) désigne la valeur du signal s à l'instant t=nΔt, Δt étant la période d'échantillonnage commune à tous les signaux. Ainsi sur la figure 1, $u(n)$ désigne le signal de sortie d'un système de diffusion sonore S. y(n) est le signal capté par le microphone, égal à la somme du signal émis par la source $s(n)$, non mesurable, et du retour acoustique x(n). Le principe de l'AFC est de modéliser la fonction de transfert $\hat{F}$ du retour acoustique dont l'entrée est u(n) et la sortie x(n) à l'aide d'un filtre A, de type FIR, i.e. à réponse impulsionnelle finie. Ce filtre est appliqué au signal $u(n)$ pour obtenir une estimation x(n) de x(n), qui est soustraite de $y(n)$. Le signal résultant ($e(n)$ sortie de l'algorithme d'AFC est une estimation de la contribution directe de la source $s(n)$.

Le système selon l'invention comprend en outre un adaptateur B configuré pour mettre à jour en temps réel l'estimation de la fonction de transfert $\hat{F}$ du retour acoustique à partir des signaux $u(n)$ et $e(n)$, et pour la transmettre à A.

La figure 1 représente un exemple d'implantation du système pour l'annulation d'écho dans le cadre d'une communication full-duplex.

L'algorithme s'appuie sur un partitionnement de la réponse impulsionnelle RI, partitionnement qui est représenté schématiquement à la figure 2, et qui va maintenant être décrit en référence à la figure 2. La figure 2 représente en ordonnée les différentes valeurs d'une réponse impulsionnelle d'un modèle de la fonction de transfert du retour acoustique en fonction du temps représenté en abscisse.

La réponse impulsionnelle est découpée selon l'axe du temps en blocs principaux $b_0, ...b_i, ..., b_{Nb}$ de tailles variables $N_0*M_0, N_1*M_1,...., N_i*M_i,..., N_{Nb}*M_{Nb}$.

Chaque bloc principal d'indice i est découpé à son tour en $N_i$ blocs de même taille $M_i$.

$h_{ji}$ désigne la portion de la réponse impulsionnelle correspondant au jème bloc de la ième taille $M_i$.

Pour chaque portion $h_{ji}$ de RI de taille $M_i$, ladite portion est concaténée avec $M_i$ zeros, de sorte que la taille de la portion concaténée est 2Mi ; puis une transformée de Fourier $F_{ji}$ de la portion concaténée est calculée.

Par la suite, $\mathbf{F}_i$ désigne le tableau de dimension $N_i \times 2M_i$ qui contient les transformées de Fourier $F_{1i}, F_{2i}, ..., F_{Ni}$ calculées pour chacune des portions concaténées du bloc $b_i$.

L'encodage de la réponse impulsionnelle RI décrit ci-dessus doit nécessairement être effectué avant de pouvoir appliquer un algorithme de convolution rapide à faible latence, tel que décrit dans la littérature. Il doit donc être appliqué à chaque fois que la réponse impulsionnelle RI est modifiée.

L'invention sur laquelle porte la revendication consiste en un procédé adaptatif qui permet de mettre à jour directement les blocs $F_{ji}$, en évitant ainsi d'avoir à effectuer les étapes d'encodage décrites ci-dessus à chaque mise jour, comme le nécessiterait un algorithme conventionnel.

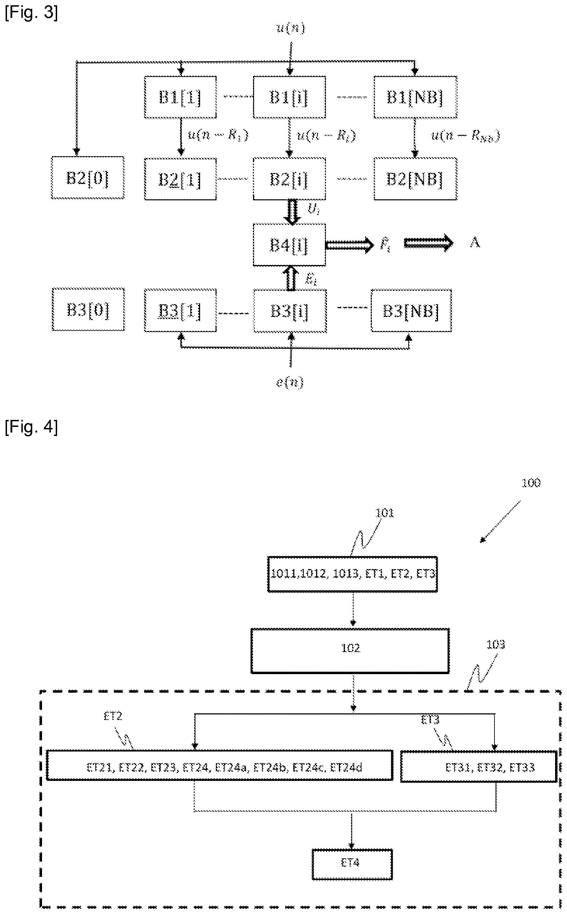

Autrement dit, selon un mode de mise en œuvre et en référence à la figure 4, le procédé 100 comprend l'estimation $\hat{x}$ du signal de retour acoustique x, qui comprend les étapes suivantes:

- déterminer 101 un filtre A, une réponse impulsionnelle RI du filtre A étant partitionnée 1011 en une partition comprenant une pluralité de blocs $b_0, ... b_i, ..., b_{Nb}$ dans le domaine temporel, chaque bloc $b_0, ... b_i, ..., b_{Nb}$ de la pluralité comprenant un nombre variable d'échantillons de la réponse impulsionnelle, égal à une taille dudit bloc ; chaque bloc de la pluralité de blocs bi comprend un nombre Ni, supérieur ou égal à 1, de sous-blocs $h_{1,i}, h_{2,i}, ...h_{j,i}... h_{Ni,i}$, chaque sous-bloc $h_{1,i}, h_{2,i}, ...h_{j,i}... h_{Ni,i}$ dudit bloc ayant une même taille Mi que les autres sous-bloc dudit bloc, de sorte que la taille d'un bloc bi est égale à Ni*Mi ; l'étape de détermination 101 comprenant en outre les étapes suivantes :

  - pour chaque sous-bloc $h_{1,i}, h_{2,i}, ... h_{j,i}... h_{Ni,i}$ de chaque bloc, créer 1012 un sous-bloc concaténé en concaténant ledit sous-bloc $h_{1,i}, h_{2,i}, ... h_{j,i}... h_{Ni,i}$ avec des échantillons virtuels, de sorte qu'une taille du sous-bloc concaténé est égale à deux fois la taille dudit sous-bloc ; de préférence, la valeur d'au moins un échantillon virtuel est comprise entre -0,5, et 0,5, de préférence égale à 0; de préférence la valeur de tous les échantillons virtuels est égale à 0 ;

  - pour chaque sous-bloc $h_{1,i}, h_{2,i}, ... h_{j,i}... h_{Ni,i}$ de chaque bloc, calculer 1013 une transformée de Fourier $F_{1,i}, F_{2,i}, ... F_{j,i}... F_{Ni,i}$ du sous-bloc concaténé créé pour ledit sous-bloc $h_{1,i}, h_{2,i}, ... h_{j,i}... h_{Ni,i}$ ;

- répéter les étapes suivantes :

  - appliquer 102 le filtre A au signal de sortie u en utilisant la transformée de Fourier $F_{1,i}, F_{2,i}, ... F_{j,i}... F_{Ni,i}$ de chaque sous-bloc $h_{1,i}, h_{2,i}, ... h_{j,i}... h_{Ni,i}$ de chaque bloc de la réponse impulsionnelle RI, pour obtenir l'estimation $\hat{x}$ du signal de retour acoustique x ;

  - adapter 103 le filtre A, en mettant à jour la transformée de Fourier $F_{1,i}, F_{2,i}, ...F_{j,i}... F_{Ni,i}$ de chaque sous-bloc $h_{1,i}, h_{2,i}, ...h_{j,i}... h_{Ni,i}$ de chaque bloc de la réponse impulsionnelle RI en fonction du signal u de sortie et du signal d'entrée e, le signal d'entrée e étant de préférence égal à la différence du signal capté y par le microphone et de l'estimation $\hat{x}$;

le procédé 100 étant caractérisé en ce que l'adaptation 103 du filtre A étant réalisée directement par une mise à jour de la transformée de Fourier sur la base de la même partition que celle déterminée à l'étape de détermination 101, et utilisée à l'étape d'application 102 du filtre A.

Le procédé adaptatif fait ainsi intervenir deux principaux composants :
Le composant ou filtre A filtre le signal $u(n)$ en appliquant un algorithme de convolution rapide avec partionnement non-uniforme de la réponse impulsionnelle.

Le composant ou adaptateur B met à jour l'estimation de la fonction de transfert du retour acoustique à partir des signaux $u(n)$ et $e(n)$, et la transmet à A.

L'adapteur B peut par exemple comprendre les composants suivants, créés selon un mode de mise en œuvre, au cours de l'étape de détermination 101, qui comprend par exemple les étapes suivantes, décrites en référence aux figures 3 et 4:

- ET1 : créer une pluralité de buffer FIFO B1(1), ..., B1(i),..., B1(Nb), chaque buffer FIFO, B1(1), ..., B1(i),..., B1(Nb),étant associé à un bloc $b_1, ... b_i, ..., b_{Nb}$ de la partition, et ayant une profondeur $R_1, R_2, ..., R_i, ... R_{Nb}$ égale à la taille dudit bloc de la partition, la profondeur $R_1, R_2, ..., R_i, ... R_{Nb}$ définissant un nombre d'échantillons u(n) du signal de sortie u pouvant être sauvegardés dans ledit buffer FIFO;
- ET2 : créer une pluralité de composants B2(0), B2(1), ..., B2(i),..., B2(Nb), la pluralité de composants B2(0), B2(1), ..., B2(i),..., B2(Nb) comprenant un composant non retardé B2(0) associé à un bloc non retardé de la partition, et au moins un composant retardé B2(1), ..., B2(i),..., B2(Nb), l'au moins un composant retardé B2(1), ..., B2(i),..., B2(Nb) étant associé à un buffer FIFO et au bloc de la partition associé audit buffer FIFO ; le composant non retardé B2(0) comprend par exemple un premier buffer non retardé $u_0$, et un deuxième buffer non retardé $v_0$ ; l'au moins un composant retardé B2(1), ..., B2(i),..., B2(Nb) comprend par exemple un premier buffer retardé $u_1$, ..., $u_i$,..., $u_{Nb}$, et un deuxième buffer retardé $v_1$, ..., $v_i$,..., $v_{Nb}$ ; le premier buffer et le deuxième buffer de chaque composant étant respectivement configurés pour recevoir un nombre d'échantillons $M_0$, $M_1$, $M_2$, ... $M_i$, ..$M_{Nb}$ égal à la taille d'un sous-bloc du bloc associé audit composant;

- ET3 : créer une pluralité de buffer source B3(0), B3(1), ..., B3(i),..., B3(Nb), chaque buffer source étant associé à un bloc de la partition et ayant une taille $M_0$, $M_1$, $M_2$, ... $M_i$, ..$M_{Nb}$ égale à la taille d'un sous-bloc du bloc associé audit buffer source ;

Selon un mode de mise en œuvre, les étapes de l'adaptation 103 du filtre A par l'adaptateur B sont décrites en détail ci-dessous en référence aux figures 3 et 4 :

- ET21 : à chaque instant n, sauvegarder l'échantillon correspondant u(n) du signal de sortie u dans le premier buffer non retardé $u_0$ du composant non retardé B2(0), jusqu'à ce que le premier buffer non retardé $u_0$ soit plein;
- ET22 : dans chaque buffer FIFO B1(1), ..., B1(i),..., B1(Nb) de la première pluralité de buffer, et pour chaque instant n, sauvegarder les échantillons u(n) du signal de sortie u, jusqu'à ce que ledit buffer soit plein, avec au moins un dernier échantillon u(n) sauvegardé dans ledit buffer et l'échantillon retardé u(n-Ri) sauvegardé en premier dans ledit buffer;
- ET23 : pour chaque composant retardé de la pluralité de composants B2(1), ..., B2(i),..., B2(Nb), à chaque instant n suivant l'instant où le buffer FIFO associé audit composant retardé est plein, sauvegarder l'échantillon retardé u(n-Ri) dudit buffer FIFO dans le premier buffer retardé $u_1$, ..., $u_i$,..., $u_{Nb}$ dudit composant retardé B2(1), ..., B2(i),..., B2(Nb), jusqu'à ce que ledit premier buffer retardé $u_1$, ..., $u_i$,..., $u_{Nb}$ soit plein;
- ET24 : pour chaque composant de la pluralité de composants B2(0), B2(1), ..., B2(i),..., B2(Nb) :

  - ET24a : lorsque le premier buffer $u_0$, $u_1$, ..., $u_i$,..., $u_{Nb}$ est plein, si le deuxième buffer $v_1$, ..., $v_i$,..., $v_{Nb}$ dudit composant est vide, recopier ledit premier buffer $u_0$, $u_1$, ..., $u_i$,..., $u_{Nb}$ dans le deuxième buffer $v_1$, ..., $v_i$,..., $v_{Nb}$ dudit composant, et répéter les étapes ET1, ET2, ET3, ET4 jusqu'à ce que le premier $u_0$, $u_1$, ..., $u_i$,..., $u_{Nb}$ soit à nouveau plein;
  - ET24b : si le deuxième buffer $v_1$, ..., $v_i$,... , $v_{Nb}$

dudit composant n'est pas vide, former un troisième buffer $w_0$, $w_1$, ..., $w_i$,..., $w_{Nb}$ en concaténant le premier et le deuxième buffer dudit composant B2(0), B2(1), ..., B2(i),..., B2(Nb), de sorte que $w_i = [v_i \; u_i]$;
  - ET24c : calculer une transformée de Fourier $S_0$, $S_1$,...,$S_i$,...$S_{Nb}$ du contenu du troisième buffer $w_0$, $w_1$, ..., $w_i$,... , $w_{Nb}$;
  - ET24d : insérer la transformée de Fourier Si en première place d'un buffer circulaire $U_i$ configuré pour contenir un historique des transformées de Fourier $S_0$, $S_1$,...,$S_i$,...$S_{Nb}$ calculées à l'étape E24c lors des $N_i$ dernières itérations de l'étape E24, pour un nombre d'itérations $N_i$ déterminé en fonction du nombre de sous-blocs du bloc associé au composant B2(0), B2(1), ..., B2(i),..., B2(Nb),

- ET31 : pour chaque buffer source de la pluralité de buffer source B3(0), B3(1), ..., B3(i),..., B3(Nb), à chaque instant n, sauvegarder l'échantillon correspondant e(n) du signal d'entrée e dans ledit buffer source B3(0), B3(1), ..., B3(i),..., B3(Nb), jusqu'à ce que ledit buffer source B3(0), B3(1), ..., B3(i),..., B3(Nb) soit plein;
- ET32 : pour chaque buffer source de la pluralité de buffer source B3(0), B3(1), ..., B3(i),..., B3(Nb), créer un buffer source concaténé en concaténant des échantillons source virtuels ayant une même valeur d'échantillon source virtuel avec ledit buffer source B3(0), B3(1), ..., B3(i),..., B3(Nb), de sorte qu'une taille du buffer source concaténé est égale à deux fois la taille dudit buffer source B3(0), B3(1), ..., B3(i),..., B3(Nb); de préférence, la valeur d'au moins un échantillon source virtuel est comprise entre -0,5, et 0,5, de préférence égale à 0; de préférence la valeur de tous les échantillons source virtuels est égale à 0 ;
- ET33 : pour chaque buffer source de la pluralité de buffer source (B3(0), B3(1), ..., B3(i),..., B3(Nb), calculer une transformée de Fourier $E_0$, $E_1$,...$E_i$,... $E_{Nb}$ du buffer source concaténé créé pour ledit buffer source B3(0), B3(1), ..., B3(i),..., B3(Nb);
- ET4 : mettre à jour la transformée de Fourier $F_{1,i}$, $F_{2,i}$,...$F_{j,i}$,... $F_{Ni,i}$ de chaque sous-bloc $h_{1,i}$, $h_{2,i}$...$h_{j,i}$· $h_{Ni,i}$ de chaque bloc $b_1$, ... $b_i$, ..., $b_{Nb}$ de la réponse impulsionnelle RI à partir du buffer circulaire obtenu à l'étape ET24d et de la transformée de Fourier $E_0$, $E_1$,...$E_i$,... $E_{Nb}$ obtenue à l'étape ET33.

Selon un mode de mise en œuvre, l'étape ET4 de mise à jour de la transformée de Fourier de chaque sous-bloc de chaque bloc de la réponse impulsionnelle à partir du premier buffer circulaire obtenu à l'étape ET2 et du buffer obtenu à l'étape ET33, est réalisée en appliquant une méthode adaptative dans le domaine fréquentiel.

Cette opération est effectuée tous les $M_i$ échan-

tillons, lorsque les blocs de données $U_i$ et $E_i$ provenant respectivement des composants B2[i] et B3[i] sont pleins. L'adaptation peut par exemple être effectuée par l'algorithme Fast Block LMS :

Boucle sur j = 1 à $N_i$ :

Calcul du produit du conjugué de $E_i$ et du $j^{eme}$ élément $U_{ji}$ de $U_i$

Calcul de la FFT inverse, mise à zéros des $M_i$ derniers éléments, calcul de la FFT

Multiplication par $2\mu_i$ (step size). Le résultat est noté $\Delta F_{ji}$

Addition de $\Delta F_{ji}$ au $j^{eme}$ élément de $F_i$ : $F_{ji} + \Delta F_{ji} \rightarrow F_{ji}$

D'autres algorithmes adaptatifs plus évolués peuvent être appliqués (par exemple NLMS, avec ou sans régularisation).

Le principe consistant à utiliser différentes tailles de blocs, communes à la convolution et à l'adaptation, suppose de choisir des jeux de paramètres d'adaptation, dont en particulier le paramètre $\mu_i$, spécifiques à chaque taille $M_i$ tout en garantissant la cohérence de l'estimation.

Plusieurs démarches peuvent être suivies pour le choix de ces jeux de paramètres ; il est possible d'obtenir une vitesse de convergence différente en début et en fin de réponse, ce qui peut être favorable en pratique.

L'algorithme de contrôle du retour acoustique proposé est ainsi du type PBFDAF, c'est-à-dire selon la terminologie anglo-saxonne « Partitionned Block Frequency Domain Adaptive Filter ». Mais, à la différence des méthodes existantes, sa particularité est d'effectuer les traitements de convolution et d'adaptation avec une même partition non-uniforme de la réponse impulsionnelle du retour acoustique. L'utilisation d'une partition non-uniforme permet de réduire considérablement la complexité par rapport aux algorithmes PBFDAF existants, à latence et ordre de filtre équivalents. Contrairement à un algotithme de type UN-PBDAF, dans lequel seule la convolution est effectuée sur un partionnement non uniforme, le fait d'adopter le même partitionnement pour la convolution et l'adaptation permet d'éviter d'avoir à calculer explicitement la réponse impulsionnelle dans le domaine temporel, ce qui réduit la complexité.

Selon un autre aspect l'invention concerne un programme d'ordinateur comprenant un ensemble d'instructions exécutables par un processeur d'un ordinateur, l'ensemble d'instructions étant configuré pour mettre en œuvre les étapes du procédé selon l'une quelconque des revendications lorsque l'ensemble d'instructions est exécuté par le processeur de l'ordinateur.

Selon encore un autre aspect l'invention concerne un support lisible par un ordinateur, comprenant un ensemble d'instructions exécutables par un processeur de ordinateur, l'ensemble d'instructions étant configuré pour mettre en œuvre les étapes du procédé selon l'un quelconque des modes de mise en œuvre décrit précédemment, lorsque l'ensemble d'instructions est exécuté par le processeur de l'ordinateur.

## Revendications

1. Procédé (100) adaptatif de contrôle de retour acoustique dans un signal de sortie (u) d'un dispositif de diffusion sonore (S), le dispositif de diffusion sonore (S) recevant en entrée un signal d'entrée (e), le signal d'entrée (e) étant une fonction d'un signal capté (y) par un microphone et d'une estimation $\widehat{(x)}$ d'un signal de retour acoustique (x), le signal capté (y) étant égal à la somme d'un signal source (s) acoustique et du signal de retour (x) acoustique, l'estimation $\widehat{(x)}$ du signal de retour acoustique (x) comprenant les étapes suivantes :

- déterminer (101) un filtre (A), une réponse impulsionnelle (RI) du filtre (A) étant partitionnée (1011) en une partition comprenant une pluralité de blocs ($b_0$, ... $b_i$, ..., $b_{Nb}$) dans le domaine temporel, chaque bloc ($b_0$, ... $b_i$, ..., $b_{Nb}$) de la pluralité comprenant un nombre d'échantillons de la réponse impulsionnelle, ledit nombre d'échantillons étant égal à une taille dudit bloc, la taille d'un bloc ($b_0$, ... $b_i$, ..., $b_{Nb}$) étant différente d'une autre taille d'au moins un autre bloc ($b_0$, ... $b_i$, ..., $b_{Nb}$), chaque bloc de la pluralité de blocs ($b_i$) comprenant un nombre ($N_i$) de sous-blocs ($h_{1,i}, h_{2,i}, ... h_{j,i}, ... h_{Ni,i}$), le nombre ($N_i$) de sous-blocs ($h_{1,i}, h_{2,i}, ... h_{j,i}, ... h_{Ni,i}$) étant supérieur ou égal à un, l'étape de détermination (101) comprenant en outre les étapes suivantes :

- pour chaque sous-bloc ($h_{1,i}, h_{2,i}, ... h_{j,i}, ... h_{Ni,i}$) de chaque bloc de la réponse impulsionnelle (RI) calculer (1013) une transformée fréquentielle ($F_{1,i}, F_{2,i}, ... F_{j,i}, ... F_{Ni,i}$) à partir dudit sous-bloc ($h_{1,i}, h_{2,i}, ... h_{j,i}, ... h_{Ni,i}$) ;

- répéter les étapes suivantes :

- appliquer (102) au signal de sortie (u) le filtre (A) en utilisant la transformée fréquentielle ($F_{1,i}, F_{2,i}, ... F_{j,i}, ... F_{Ni,i}$) de chaque sous-bloc ($h_{1,i}, h_{2,i}, ... h_{j,i}, ... h_{Ni,i}$) de chaque bloc de la réponse impulsionnelle (RI), pour obtenir l'estimation $\widehat{(x)}$ du signal de retour acoustique (x) ;

- adapter (103) le filtre (A), en mettant à jour la transformée fréquentielle ($F_{1,i}, F_{2,i}, ... F_{j,i}, ... F_{Ni,i}$) de chaque sous-bloc ($h_{1,i}, h_{2,i}, ... h_{j,i}, ... h_{Ni,i}$) de chaque bloc de la réponse impulsionnelle (RI) en fonction du signal (u) de sortie et du signal d'entrée (e),

où l'adaptation (103) du filtre (A) est réalisée par une mise à jour de la transformée fréquentielle calculée et adaptée sur la base de la même partition que celle déterminée à l'étape de détermination (101), et utilisée à l'étape d'application (102) du filtre (A).

**2.** Procédé selon la revendication 1 dans lequel chaque sous-bloc ($h_{1,i}, h_{2,i}, ... h_{j,i}, ... h_{Ni,i}$) dudit bloc a une même taille ($Mi$) que les autres sous-bloc dudit bloc, de sorte que la taille d'un bloc ($bi$) est égale à ($Ni*Mi$).

**3.** Procédé selon l'une quelconque des revendications 1 ou 2, dans lequel le calcul de la transformée fréquentielle d'un sous sous-bloc ($h1,i, h2,i, ... hj,i, ... hNi,i$) d'un bloc de la réponse impulsionnelle (RI) comprend les étapes suivantes :

- créer (1012) un sous-bloc concaténé en concaténant ledit sous-bloc ($h_{1,i}, h_{2,i}, ... h_{j,i}, ... hNi,i$) avec des échantillons virtuels, de sorte qu'une taille du sous-bloc concaténé est égale à au moins deux fois la taille dudit sous-bloc ;
- calculer (1013) la transformée fréquentielle ($F1,i, F2,i, ... Fj,i, ... FNi,i$) du sous-bloc concaténé créé pour ledit sous-bloc ($h1,i, h2,i, ... hj,i, ... hNi,i$) ;

**4.** Procédé (100) selon l'une quelconque des revendications 1 à 3, dans lequel le signal de sortie (u), le signal d'entrée (e), comprennent respectivement une pluralité d'échantillons ($u(n)$), ($e(n)$) dans le domaine temporel, chaque échantillon de ladite pluralité ($u(n)$), respectivement ($e(n)$), correspondant à une valeur, à des instants ($n$) successifs, du signal de sortie (u), respectivement d'entrée (e), et dans lequel l'étape de détermination (101) comprend en outre les étapes suivantes :

- (ET2) créer une pluralité de composants ($B2(0), B2(1), ..., B2(i), ..., B2(Nb)$), la pluralité de composants ($B2(0), B2(1), ..., B2(i), ..., B2(Nb)$) comprenant un composant non retardé ($B2(0)$) associé à un bloc non retardé de la partition, et au moins un composant retardé ($B2(1), ..., B2(i), ..., B2(Nb)$), le composant non retardé ($B2(0)$) comprenant un buffer de sortie non retardé ($w_0$), l'au moins un composant retardé ($B2(1), ..., B2(i), ..., B2(Nb)$) comprenant un buffer de sortie retardé ($w_1, ..., w_i, ..., w_{Nb}$);
- (ET3) créer une pluralité de buffer source ($B3(0), B3(1), ..., B3(i), ..., B3(Nb)$), chaque buffer source étant associé à un bloc de la partition;

et dans lequel l'étape d'adaptation (103) comprend les étapes suivantes :

- (ET24c) calculer une transformée fréquentielle ($S_0, S_1, ..., S_i, ... S_{Nb}$) du contenu du buffer de sortie ($w_0, w_1, ..., w_i, ..., w_{Nb}$);
- (ET24d) insérer la transformée fréquentielle $Si$ dans un buffer circulaire ($U_i$) configuré pour contenir un historique des transformées fréquentielles ($U_{0,i}, U_{2,i}, ... , U_{j,i}, ... , U_{Ni,i}$) calculées à l'étape (E24c) lors des $N_i$ dernières itérations de l'étape (E24c), pour un nombre d'itérations ($N_i$) déterminé en fonction du nombre de sous-blocs du bloc associé au composant ($B2(0), B2(1), ..., B2(i), ..., B2(Nb)$);
- (ET33) pour chaque buffer source de la pluralité de buffer source ($B3(0), B3(1), ..., B3(i), ..., B3(Nb)$), calculer une transformée fréquentielle ($E_0, E_1, ... E_i, ... E_{Nb}$) à partir dudit buffer source ($B3(0), B3(1), ..., B3(i), ..., B3(Nb)$) ;
- (ET4) mettre à jour la transformée fréquentielle ($F_{1,i}, F_{2,i}, ... F_{j,i}, ... F_{Ni,i}$) de chaque sous-bloc ($h_{1,i}, h_{2,i}, ... h_{j,i}, ... h_{Ni,i}$) de chaque bloc ($b_1, ... b_i, ..., b_{Nb}$) de la réponse impulsionnelle (RI) à partir du buffer circulaire, obtenu à l'étape (ET2), et de la transformée fréquentielle ($E_0, E_1, ... E_i, ... E_{Nb}$) calculée à partir des buffers source à l'étape (ET33).

**5.** Procédé (100) selon la revendication 4, dans lequel le composant non retardé ($B2(0)$) comprend un premier buffer non retardé ($u_0$) et un deuxième buffer non retardé ($v_0$), l'au moins un composant retardé ($B2(1), ..., B2(i), ..., B2(Nb)$) comprenant un premier buffer retardé ($u_1, ..., u_i, ..., u_{Nb}$), et un deuxième buffer retardé ($v_1, ..., v_i, ..., v_{Nb}$), et dans lequel le procédé (100) comprend les étapes suivantes

- (ET1) créer une pluralité de buffer FIFO ($B1(1), ..., B1(i), ..., B1(Nb)$), chaque buffer FIFO ($B1(1), ..., B1(i), ..., B1(Nb)$) étant associé à un bloc ($b_1, ... b_i, ..., b_{Nb}$) de la partition, et ayant une profondeur ($R_1, R_2, ..., R_i, ... R_{Nb}$) égale à la taille dudit bloc de la partition, la profondeur ($R_1, R_2, ..., R_i, ... R_{Nb}$) définissant un nombre d'échantillons ($u(n)$) du signal de sortie (u) pouvant être sauvegardés dans ledit buffer FIFO, l'au moins un composant retardé ($B2(1), ..., B2(i), ..., B2(Nb)$) étant associé à un buffer FIFO et au bloc de la partition associé audit buffer FIFO;

et dans lequel l'étape d'adaptation (103) comprend les étapes suivantes réalisées avant l'étape (ET24c):

- (ET21) à chaque instant ($n$) sauvegarder l'échantillon correspondant ($u(n)$) du signal de sortie (u) dans le premier buffer non retardé ($u_0$) du composant non retardé ($B2(0)$), jusqu'à ce que le premier buffer non retardé ($u_0$) soit plein;
- (ET22) dans chaque buffer FIFO ($B1(1), ...,$

B1(i),..., B1(Nb)) de la première pluralité de buffer FIFO, et pour chaque instant (n), sauvegarder les échantillons (u(n)) du signal de sortie (u), jusqu'à ce que ledit buffer soit plein, avec au moins un dernier échantillon (u(n)) sauvegardé dans ledit buffer et l'échantillon retardé (u(n-Ri)) sauvegardé en premier dans ledit buffer;

- (ET23) pour chaque composant retardé de la pluralité de composants (B2(1), ..., B2(i),..., B2(Nb)), à chaque instant (n) suivant l'instant où le buffer FIFO associé audit composant retardé est plein, sauvegarder l'échantillon retardé (u(n-Ri)) dudit buffer FIFO dans le premier buffer retardé (u$_1$, ..., u$_i$,..., u$_{Nb}$) dudit composant retardé (B2(1), ..., B2(i),..., B2(Nb)), jusqu'à ce que ledit premier buffer retardé (u$_1$, ..., u$_i$,..., u$_{Nb}$) soit plein ;

- (ET24) pour chaque composant de la pluralité de composants (B2(0), B2(1), ..., B2(i),..., B2(Nb)) :

- (ET24a) lorsque le premier buffer (u$_0$, u$_1$, ..., u$_i$,..., u$_{Nb}$) est plein, si le deuxième buffer (v$_1$, ..., v$_i$,..., v$_{Nb}$) dudit composant est vide, recopier ledit premier buffer (u$_0$, u$_1$, ..., u$_i$,..., u$_{Nb}$) dans le deuxième buffer (v$_1$, ..., v$_i$,..., v$_{Nb}$) dudit composant, et répéter les étapes (ET1), (ET2), (ET3), (ET4) jusqu'à ce que le premier (u$_0$, u$_1$, ..., u$_i$,..., u$_{Nb}$) soit à nouveau plein;

- (ET24b) si le deuxième buffer (v$_1$, ..., v$_i$,..., v$_{Nb}$) dudit composant n'est pas vide, former le buffer de sortie (w$_0$, w$_1$, ..., w$_i$,..., w$_{Nb}$) en concaténant le premier et le deuxième buffer dudit composant (B2(0), B2(1), ..., B2(i),..., B2(Nb)) de sorte que wi = [vi ui];

6. Procédé (100) selon la revendication 5 dans lequel l'étape d'adaptation (103) comprend les étapes suivantes :

- (ET31) pour chaque buffer source de la pluralité de buffer source (B3(0), B3(1), ..., B3(i),..., B3(Nb)), à chaque instant (n), sauvegarder l'échantillon correspondant e(n) du signal d'entrée (e) dans ledit buffer source (B3(0), B3(1), ..., B3(i),..., B3(Nb)), jusqu'à ce que ledit buffer source (B3(0), B3(1), ..., B3(i),..., B3(Nb)) soit plein;

- (ET32) pour chaque buffer source de la pluralité de buffer source (B3(0), B3(1), ..., B3(i),..., B3(Nb)), créer un buffer source concaténé en concaténant des échantillons source virtuels ayant une même valeur d'échantillon source virtuel avec ledit buffer source (B3(0), B3(1), ..., B3(i),..., B3(Nb)), de sorte qu'une taille du buffer source concaténé est égale à deux fois la taille dudit buffer source (B3(0), B3(1), ...,

B3(i),..., B3(Nb)) ;

et dans lequel le calcul (ET33) d'une transformée fréquentielle (E0, E1,...Ei,... ENb) à partir dudit buffer source (B3(0), B3(1), ..., B3(i),..., B3(Nb)) est réalisé à partir du buffer source concaténé créé pour chaque buffer source de la pluralité de buffer source (B3(0), B3(1), ..., B3(i),..., B3(Nb)) .

7. Procédé (100) selon l'une quelconque des revendications précédentes, dans lequel la transformée fréquentielle est une transformée de Fourier.

8. Programme d'ordinateur comprenant un ensemble d'instructions exécutables par un processeur d'un ordinateur, l'ensemble d'instructions étant configuré pour mettre en œuvre les étapes du procédé selon l'une quelconque des revendications 1 à 7 lorsque l'ensemble d'instructions est exécuté par le processeur de l'ordinateur.

9. Support apte à être lu par un ordinateur, comprenant un ensemble d'instructions exécutables par un processeur d'ordinateur, l'ensemble d'instructions étant configuré pour mettre en œuvre les étapes du procédé selon l'une quelconque des revendications 1 à 7, lorsque l'ensemble d'instructions est exécuté par le processeur de l'ordinateur.

**Patentansprüche**

1. Adaptives Verfahren (100) zur Steuerung der akustischen Rückkopplung in einem Ausgangssignal (u) einer Tonausstrahlvorrichtung (S), wobei die Tonausstrahlvorrichtung (S) am Eingang ein Eingangssignal (e) empfängt, wobei das Eingangssignal (e) eine Funktion eines von einem Mikrofon aufgenommenen Signals (y) und einer Schätzung $\widehat{\square}$ eines akustischen Rückkopplungssignals (x) ist, wobei das aufgenommene Signal (y) gleich der Summe aus einem akustischen Quellsignal (s) und dem akustischen Rückkopplungssignal (x) ist, wobei die Schätzung $\widehat{\square}$ des akustischen Rückkopplungssignals (x) die folgenden Schritte umfasst:

- Bestimmen (101) eines Filters (A), wobei eine Impulsantwort (RI) des Filters (A) in eine Partition (1011) aufgeteilt ist, die eine Vielzahl von Blöcken (b$_0$, ... b$_i$, ..., b$_{Nb}$) im Zeitbereich umfasst, wobei jeder Block (b$_0$, ... b$_i$, ..., b$_{Nb}$) der Vielzahl eine Anzahl von Abtastwerten der Impulsantwort umfasst, wobei die Anzahl der Abtastwerte gleich einer Größe des Blocks ist, wobei sich die Größe eines Blocks (b$_0$, ... b$_i$, ..., b$_{Nb}$) von einer anderen Größe mindestens

eines anderen Blocks ($b_0$, ... bi, ..., $b_{Nb}$) unterscheidet, wobei jeder Block der Vielzahl von Blöcken (bi) eine Anzahl (Ni) von Unterblöcken ($h_{1,i}, h_{2,i}$, ... $h_{j,i}$, ... $h_{Ni,i}$) umfasst, wobei die Anzahl (Ni) von Unterblöcken ($h_{1,i}, h_{2,i}$, ... $h_{j,i}$, ... $h_{Ni,i}$) größer oder gleich eins ist, wobei der Bestimmungsschritt (101) ferner die folgenden Schritte umfasst:

- für jeden Unterblock ($h_{1,i}, h_{2,i}$, ... $h_{j,i}$, ... $h_{Ni,i}$) jedes Blocks der Impulsantwort (RI) eine Frequenzwandlung ($F_{1,i}, F_{2,i}$, ... $F_{j,i}$, ... $F_{Ni,i}$) ausgehend von diesem Unterblock ($h_{1,i}, h_{2,i}$, ... $h_{j,i}$, ... $h_{Ni,i}$) berechnet (1013) wird;
- Wiederholen der folgenden Schritte:
- Anwenden (102) des Filters (A) auf das Ausgangssignal (u) durch Verwenden der Frequenzwandlung ($F_{1,i}, F_{2,i}$, ... $F_{j,i}$, ... $F_{Ni,i}$) jedes Unterblocks ($h_{1,i}, h_{2,i}$, ... $h_{j,i}$, ... $h_{Ni,i}$) jedes Blocks der Impulsantwort (RI), um die Schätzung $\widehat{(x)}$ des akustischen Rückkopplungssignals (x) zu erhalten;
- Anpassen (103) des Filters (A) durch Aktualisieren der Frequenzwandlung ($F_{1,i}$, $F_{2,i}$, ...$F_{j,i}$, ... $F_{Ni,i}$) jedes Unterblocks ($h_{1,i}, h_{2,i}$, ...$h_{j,i}$, ... $h_{Ni,i}$) jedes Blocks der Impulsantwort (RI) in Abhängigkeit vom Ausgangssignal (u) und vom Eingangssignal (e), wobei das Anpassen (103) des Filters (A) durch eine Aktualisierung der berechneten und angepassten Frequenztransformation auf der Grundlage derselben Partition wie der, die im Bestimmungsschritt (101) bestimmt und im Anwendungsschritt (102) des Filters (A) verwendet wurde, durchgeführt wird.

2. Verfahren nach Anspruch 1, wobei jeder Unterblock ($h_{1,i}, h_{2,i}$, ...$h_{j,i}$, ... $h_{Ni,i}$) des Blocks dieselbe Größe (Mi) aufweist wie die anderen Unterblöcke des Blocks, so dass die Größe eines Blocks (bi) gleich (Ni*Mi) ist.

3. Verfahren nach einem der Ansprüche 1 oder 2, wobei das Berechnen der Frequenztransformation eines Unterblocks (h1,i,h2,i, ... hj,i, ... hNi,i) eines Blocks der Impulsantwort (RI) die folgenden Schritte umfasst:

- Erstellen (1012) eines verketteten Unterblocks, indem der Unterblock (h1,i,h2,i,...hj,i,... hNi,i) mit virtuellen Abtastwerten verkettet wird, so dass eine Größe des verketteten Unterblocks gleich mindestens dem Doppelten der Größe des Unterblocks ist;
- Berechnen (1013) der Frequenztransformation (F1,i, F2,i,...Fj,i,...FNi,i) des verketteten Unterblocks, der für den Unterblock (h1,i,h2,i,... hj,i,... hNi,i) erstellt wurde;

4. Verfahren (100) nach einem der Ansprüche 1 bis 3, wobei das Ausgangssignal (u) und das Eingangssignal (e) jeweils eine Vielzahl von Abtastwerten (u(n)), (e(n)) im Zeitbereich umfassen, wobei jeder Abtastwert der Vielzahl (u(n)) bzw. (e(n)) einem Wert zu aufeinanderfolgenden Zeitpunkten (n) des Ausgangssignals (u) bzw. des Eingangssignals (e) entspricht, und wobei der Bestimmungsschritt (101) ferner die folgenden Schritte umfasst:

- (ET2) Erstellen einer Vielzahl von Komponenten (B2(0), B2(1), ..., B2(i), ..., B2(Nb)), wobei die Vielzahl von Komponenten (B2(0), B2(1), ..., B2(i), ..., B2(Nb)) eine nicht verzögerte Komponente (B2(0)), der ein nicht verzögerter Block der Partition zugeordnet ist, und mindestens eine verzögerte Komponente (B2(1 ), ..., B2(i), ..., B2(Nb)) umfasst, wobei die nicht verzögerte Komponente (B2(0)) einen nicht verzögerten Ausgangspuffer ($w_0$) umfasst, wobei die mindestens eine verzögerte Komponente (B2(1), ..., B2(i), ..., B2(Nb)) einen verzögerten Ausgangspuffer ($w_1$, ..., $w_i$, ..., $w_{Nb}$) umfasst;
- (ET3) Erstellen einer Vielzahl von Quellpuffern (B3(0), B3(1), ..., B3(i), ..., B3(Nb)), wobei jeder Quellpuffer ein Block der Partition zugeordnet ist;

und wobei der Anpassungsschritt (103) die folgenden Schritte umfasst:

- (ET24c) Berechnen einer Frequenztransformation ($S_0$, $S_1$, ..., $S_i$, ... $S_{Nb}$) des Inhalts des Ausgangspuffers ($w_0$, $w_1$, ..., $w_i$, ..., $w_{Nb}$);
- (ET24d) Einfügen der Frequenztransformation Si in einen Kreispuffer ($U_i$), der so konfiguriert ist, dass er eine Historie der Frequenztransformationen ($U_{0,i}, U_{2,i}$, ..., $U_{j,i}$ ..., $U_{Ni,i}$), die in Schritt (E24c) bei den letzten $N_i$ Iterationen des Schritts (E24c) berechnet wurden, für eine Anzahl von Iterationen ($N_i$) enthält, die in Abhängigkeit von der Anzahl der Unterblöcke des mit der Komponente (B2(0), B2(1), ..., B2(i), ..., B2(Nb)) verbundenen Blocks bestimmt wird;
- (ET33) für jeden Quellpuffer der Vielzahl von Quellpuffern (B3(0), B3(1), ..., B3(i), ..., B3(Nb)), Berechnen einer Frequenztransformation ($E_0$, $E_1$, ...$E_i$, ... $E_{Nb}$) ausgehend von dem Quellpuffern (B3(0), B3(1), ..., B3(i), ..., B3(Nb));
- (ET4) Aktualisieren der Frequenztransformation ($F_{1,i}$, $F_{2,i}$, ...$F_{j,i}$, ... $F_{Ni,i}$) jedes Unterblocks ($h_{1,i}$, $h_{2,i}$, ...$h_{j,i}$, ... $h_{Ni,i}$) jedes Blocks ($b_1$, ...$b_i$, ..., $b_{Nb}$) der Impulsantwort (RI) ausgehend von dem Kreispuffer, der in Schritt (ET2) erhalten wurde,

und der Frequenztransformation ($E_0, E_1, ... E_i, ... E_{Nb}$), die ausgehend von den Quellpuffern in Schritt (ET33) berechnet wurde.

5. Verfahren (100) nach Anspruch 4, wobei die nicht verzögerte Komponente (B2(0)) einen ersten nicht verzögerten Puffer ($u_0$) und einen zweiten nicht verzögerten Puffer ($v_0$) umfasst, wobei die mindestens eine verzögerte Komponente (B2(1), ..., B2(i), ..., B2(Nb)) einen ersten verzögerten Puffer ($u_1$, ..., $u_i$, ..., $u_{Nb}$) und einen zweiten verzögerten Puffer ($v_1$, ..., $v_i$, ..., $v_{Nb}$) umfasst, und wobei das Verfahren (100) die folgenden Schritte umfasst

- (ET1) Erstellen einer Vielzahl von FIFO-Puffern (B1(1), ..., B1(i), ..., B1(Nb)), wobei jeder FIFO-Puffer (B1(1), ..., B1(i), ..., B1(Nb)) einem Block ($b_1$, ...$b_i$, ..., $b_{Nb}$) der Partition zugeordnet ist und eine Tiefe ($R_1, R_2, ..., R_i, ... R_{Nb}$) aufweist, die gleich der Größe des Blocks der Partition ist, wobei die Tiefe ($R_1, R_2, ..., R_i, ... R_{Nb}$) eine Anzahl von Abtastwerten (u(n)) des Ausgangssignals (u) definiert, die in dem FIFO-Puffer gespeichert werden können, wobei die mindestens eine verzögerte Komponente (B2(1), ..., B2(i), ..., B2(Nb)) einem FIFO-Puffer und dem mit dem FIFO-Puffer verbundenen Block der Partition zugeordnet ist;

und wobei der Anpassungsschritt (103) die folgenden Schritte umfasst, die vor dem Schritt (ET24c) durchgeführt werden:

- (ET21) Speichern des entsprechenden Abtastwerts (u(n)) des Ausgangssignals (u) im ersten nicht verzögerten Puffer ($u_0$) der nicht verzögerten Komponente (B2(0)) zu jedem Zeitpunkt (n), bis der erste nicht verzögerte Puffer ($u_0$) voll ist;
- (ET22) in jedem FIFO-Puffer (B1(1), ..., B1(i), ..., B1(Nb)) der ersten Vielzahl von FIFO-Puffern und zu jedem Zeitpunkt (n), Speichern der Abtastwerte (u(n)) des Ausgangssignals (u), bis der Puffer voll ist, wobei mindestens eine letzter Abtastwert (u(n)) in dem Puffer gespeichert wird und der verzögerte Abtastwert (u(n-Ri)) zuerst in dem Puffer gespeichert wird;
- (ET23) für jede verzögerte Komponente der Vielzahl von Komponenten (B2(1), ..., B2(i), ..., B2(Nb)) zu jedem Zeitpunkt (n) nach dem Zeitpunkt, zu dem der mit der verzögerten Komponente verbundene FIFO-Puffer voll ist, Speichern des verzögerten Abtastwerts (u(n-Ri)) des FIFO-Puffers im ersten verzögerten Puffer ($u_1$, ..., $u_i$, ..., $u_{Nb}$) der verzögerten Komponente (B2(1), ..., B2(i), ..., B2(Nb)), bis der erste verzögerte Puffer ($u_1$, ..., $u_i$, ..., $u_{Nb}$) voll ist;
- (ET24) für jede Komponente der Vielzahl von Komponenten (B2(0), B2(1), ..., B2(i), ..., B2(Nb)):

- (ET24a) wenn der erste Puffer ($u_0$, $u_1$, ..., $u_i$, ..., $u_{Nb}$) voll ist, wenn der zweite Puffer ($v_1$, ..., $v_i$, ..., $v_{Nb}$) der Komponente leer ist, Kopieren des ersten Puffers ($u_0$, $u_1$, ..., $u_i$, ..., $u_{Nb}$) in den zweiten Puffer ($v_1$, ..., $v_i$, ..., $v_{Nb}$) der Komponente und Wiederholen der Schritte (ET1), (ET2), (ET3), (ET4), bis der erste ($u_0$, $u_1$, ..., $u_i$, ..., $u_{Nb}$) wieder voll ist;
- (ET24b) wenn der zweite Puffer ($v_1$, ..., $v_i$, ..., $v_{Nb}$) der Komponente nicht leer ist, Bilden des Ausgangspuffers ($w_0$, $w_1$, ..., $w_i$, ..., $w_{Nb}$) durch Verkettung des ersten und des zweiten Puffers der Komponente (B2(0), B2(1), ..., B2(i), ..., B2(Nb)), so dass wi = [vi ui];

6. Verfahren (100) nach Anspruch 5, wobei der Anpassungsschritt (103) die folgenden Schritte umfasst:

- (ET31) für jeden Quellpuffer der Vielzahl von Quellpuffern (B3(0), B3(1), ..., B3(i), ..., B3(Nb)) zu jedem Zeitpunkt (n), Speichern des entsprechenden Abtastwerts e(n) des Eingangssignals (e) in dem Quellpuffer (B3(0), B3(1), ..., B3(i), ..., B3(Nb)), bis der Quellpuffer (B3(0), B3(1), ..., B3(i), ..., B3(Nb)) voll ist;
- (ET32) für jeden Quellpuffer der Vielzahl von Quellpuffern (B3(0), B3(1), ..., B3(i), ..., B3(Nb)), Erstellen eines verketteten Quellpuffer, indem virtuelle Quellabtastwerte, die denselben virtuellen Quellabtastwert aufweisen, mit dem Quellpuffer (B3(0), B3(1), ..., B3(i), ..., B3(Nb)) verkettet werden, so dass eine Größe des verketteten Quellpuffers gleich dem Doppelten der Größe des Quellpuffers (B3(0), B3(1), ..., B3(i), ..., B3(Nb)) ist;

und wobei das Berechnen (ET33) einer Frequenztransformation (E0, E1, ...Ei, ... ENb) ausgehend von dem Quellpuffer (B3(0), B3(1), ..., B3(i), ..., B3(Nb)) ausgehend von dem verketteten Quellpuffer, der für jeden Quellpuffer der Vielzahl von Quellpuffern (B3(0), B3(1), ..., B3(i), ..., B3(Nb)) erstellt wird, durchgeführt wird.

7. Verfahren (100) nach einem der vorhergehenden Ansprüche, wobei die Frequenztransformation eine Fourier-Transformation ist.

8. Computerprogramm, das einen Anweisungssatz umfasst, der von einem Computerprozessor ausgeführt werden kann, wobei der Anweisungssatz so konfiguriert ist, dass er die Verfahrensschritte nach einem der Ansprüche 1 bis 7 durchführt, wenn der Anweisungssatz vom Computerprozessor ausgeführt wird.

9. Computerlesbares Medium, das einen Anweisungssatz umfasst, der von einem Computerprozessor ausgeführt werden kann, wobei der Anweisungssatz so konfiguriert ist, dass er die Verfahrensschritte nach einem der Ansprüche 1 bis 7 durchführt, wenn der Anweisungssatz vom Computerprozessor ausgeführt wird.

**Claims**

1. An acoustic feedback control adaptive method (100) in an output signal (u) of a sound broadcasting device (S), the sound broadcasting device (S) receiving as input an input signal (e), the input signal (e) being a function of a signal (y) captured by a microphone and an estimation $\widehat{(x)}$ of an acoustic feedback signal (x), the captured signal (y) being equal to the sum of an acoustic source signal (s) and the acoustic feedback signal (x), the estimation $\widehat{(x)}$ of the acoustic feedback signal (x) comprising the following steps of:

- determining (101) a filter (A), an impulse response (RI) of the filter (A) being partitioned (1011) into a partition comprising a plurality of blocks $(b_0, ...b_i, ..., b_{Nb})$ in the time domain, each block $(b_0, ...b_i, ..., b_{Nb})$ of the plurality comprising a number of samples of the impulse response, said number of samples being equal to a size of said block, the size of a block $(b_0, ... b_i, ..., b_{Nb})$ being different from another size of at least one other block $(b_0, ...b_i, ..., b_{Nb})$, each block of the plurality of blocks $(b_i)$ comprising a number $(N_i)$ of sub-blocks $(h_{1,i}, h_{2,i}, ... h_{j,i}, ... h_{Ni,i})$, the number $(N_i)$ of sub-blocks $(h_{1,i}, h_{2,i}, ... h_{j,i}, ... h_{Ni,i})$ being greater than or equal to one, the determination step (101) further comprising the following steps of:

- for each sub-block $(h_{1,i}, h_{2,i}, ... h_{j,i}, ... h_{Ni,i})$ of each block of the impulse response (RI), calculating (1013) a frequency transform $(F_{1,i}, F_{2,i}, ... F_{j,i}, ... F_{Ni,i})$ from said sub-block $(h_{1,i}, h_{2,i}, ... h_{j,i}, ... h_{Ni,i})$,
- repeating the following steps of:

- applying (102) the filter (A) to the output signal (u) using the frequency transform $(F_{1,i}, F_{2,i}, ... F_{j,i}, ... F_{Ni,i})$ of each sub-block $(h_{1,i}, h_{2,i}, ... h_{j,i}, ... h_{Ni,i})$ of each block of the impulse response (RI), to obtain the estimation $\widehat{(x)}$ of the acoustic feedback signal (x);

- adapting (103) the filter (A), by updating the frequency transform $(F_{1,i}, F_{2,i}, ... F_{j,i}, ... F_{Ni,i})$ of each sub-block $(h_{1,i}, h_{2,i}, ... h_{j,i}, ... h_{Ni,i})$ of each block of the impulse response (RI) as a function of the output signal (u) and the input signal (e),

wherein the adaptation (103) of the filter (A) is carried out by an update of the frequency transform calculated and adapted based on the same partition as that determined in the determination step (101) and used in the step of applying (102) the filter (A).

2. The method according to claim 1, wherein each sub-block $(h_{1,i}, h_{2,i}, ... h_{j,i}, ... h_{Ni,i})$ of said block has the same size $(M_i)$ as the other sub-blocks of said block, so that the size of a block $(b_i)$ is equal to $(N_i*M_i)$.

3. The method according to any one of claims 1 to 2, wherein the calculation of the frequency transform of a sub-block $(h_{1,i}, h_{2,i}, ... h_{j,i}, ... h_{Ni,i})$ of a block of the impulse response (RI) comprises the following steps of:

- creating (1012) a concatenated sub-block by concatenating said sub-block $(h_{1,i}, h_{2,i}, ... h_{j,i}, ... h_{Ni,i})$ with virtual samples, such that a size of the concatenated sub-block is equal to at least twice the size of said sub-block;
- calculating (1013) the frequency transform $(F_{1,i}, F_{2,i}, ... F_{j,i}, ... F_{Ni,i})$ of the concatenated sub-block created for said sub-block $(h_{1,i}, h_{2,i}, ... h_{j,i}, ... h_{Ni,i})$,

4. The method (100) according to any one of claims 1 to 3, wherein the output signal (u), the input signal (e), respectively comprise a plurality of samples $(u(n))$, $(e(n))$ in the time domain, each sample of said plurality $(u(n))$, respectively $(e(n))$, corresponding to one value, at successive instants (n), of the output signal (u), respectively of the input signal (e), and wherein the determination step (101) further comprises the following steps of:

- (ET2) creating a plurality of components $(B2(0), B2(1), ..., B2(i), ..., B2(Nb))$, the plurality of components $(B2(0), B2(1), ..., B2(i), ..., B2(Nb))$ comprising a non-delayed component $(B2(0))$ associated with a non-delayed block of the partition, and at least one delayed component $(B2(1), ..., B2(i), ..., B2(Nb))$, the non-delayed component $(B2(0))$ comprising a non-delayed output buffer $(w_0)$, the at least one delayed component $(B2(1), ..., B2(i), ..., B2(Nb))$ comprising a delayed output buffer $(w_1, ..., w_i, ..., w_{Nb})$;
- (ET3) creating a plurality of source buffers (B3(0), B3(1), ..., B3(i), ..., B3(Nb)), each source buffer being associated with a block of the partition;

and wherein the adaptation step (103) comprises the following steps of:

- (ET24c) calculating a frequency transform ($S_0$, $S_1$,...,$S_i$,...$S_{Nb}$) of the output buffer contents ($w_0$, $w_1$, ..., $w_i$, ..., $w_{Nb}$);
- (ET24d) inserting the frequency transform $S_i$ in a ring buffer ($U_i$) configured to contain a history of the frequency transforms ($U_{0,i}$, $U_{2,i}$,..., $U_{j,i}$,... , $U_{Ni,i}$) calculated in step (E24c) during the Ni last iterations of step (E24c), for a number of iterations (Ni) determined according to the number of sub-blocks of the block associated with the component ($B2(0)$, $B2(1)$, ..., $B2(i)$,..., $B2(Nb)$);
- (ET33) for each source buffer of the plurality of source buffers ($B3(0)$, $B3(1)$, ..., $B3(i)$..., $B3(Nb)$), calculating a frequency transform ($E_0$,$E_1$,...,$E_i$,...$E_{Nb}$) from said source buffer ($B3(0)$, $B3(1)$, ..., $B3(i)$,..., $B3(Nb)$);
- (ET4) updating the frequency transform ($F_{1,i}$, $F_{2,i}$,...$F_{j,i}$... $F_{Ni,i}$) of each sub-block ($h_{1,i}$,$h_{2,i}$,... $h_{j,i}$,... $h_{Ni,i}$) of each block ($b_1$, ...$b_i$, ..., $b_{Nb}$) of the impulse response (RI) from the ring buffer, obtained in step (ET2), and from the frequency transform ($E_0$, $E_1$,...,$E_i$,...$E_{Nb}$) calculated from the source buffers in step (ET33).

5. The method (100) according to claim 4, wherein the non-delayed component ($B2(0)$) comprises a first non-delayed buffer ($u_0$) and a second non-delayed buffer ($v_0$), the at least one delayed component ($B2(1)$, ..., $B2(i)$,..., $B2(Nb)$) comprising a first delayed buffer ($u_1$,..., $u_i$,..., $u_{Nb}$), and a second delayed buffer ($v_1$, ..., $v_i$, ..., $v_{Nb}$), and wherein the method (100) comprises the following steps of

- (ET1) creating a plurality of FIFO buffers ($B1(1)$, ..., $B1(i)$,..., $B1(Nb)$), each FIFO buffer ($B1(1)$, ..., $B1(i)$,..., $B1(Nb)$) being associated with a block ($b_1$, ... $b_i$, ..., $b_{Nb}$) of the partition, and having a depth ($R_1$, $R_2$, ..., $R_i$, ... $R_{Nb}$) equal to the size of said block of the partition, the depth ($R_1$, $R_2$, ..., $R_i$, ... $R_{Nb}$) defining a number of samples ($u(n)$) of the output signal ($u$) which may be backed up in said FIFO buffer, the at least one delayed component ($B2(1)$, ..., $B2(i)$,..., $B2(Nb)$) being associated with a FIFO buffer and with the partition block associated with said FIFO buffer;

and wherein the adaptation step (103) comprises the following steps, carried out before step (ET24c), of:

- (ET21) at each instant (n), backing up the corresponding sample ($u(n)$) of the output signal ($u$) in the first non-delayed buffer ($u_0$) of the non-delayed component ($B2(0)$), until the first non-delayed buffer ($u_0$) is full;
- (ET22) in each FIFO buffer ($B1(1)$, ..., $B1(i)$,..., $B1(Nb)$) of the first plurality of FIFO buffers, and for each instant (n), backing up the samples ($u(n)$) of the output signal ($u$), until said buffer is full, with at least one last sample ($u(n)$) backed up in said buffer and the delayed sample ($u(n-Ri)$) backed up first in said buffer;
- (ET23) for each delayed component of the plurality of components ($B2(1)$, ..., $B2(i)$,..., $B2(Nb)$), at each instant (n) following the instant when the FIFO buffer associated with said delayed component is full, backing up the delayed sample ($u(n-Ri)$) of said FIFO buffer in the first delayed buffer ($u_1$,..., $u_i$,..., $u_{Nb}$) of said delayed component ($B2(1)$, ..., $B2(i)$,..., $B2(Nb)$), until said first delayed buffer ($u_1$,..., $u_i$,..., $u_{Nb}$) is full;
- (ET24) for each component of the plurality of components ($B2(0)$, $B2(1)$,..., $B2(i)$,..., $B2(Nb)$):

- (ET24a) when the first buffer ($u_0$, $u_1$,..., $u_i$,..., $u_{Nb}$) is full, if the second buffer ($v_1$, ..., $v_i$,..., $v_{Nb}$) of said component is empty, copying said first buffer ($u_0$, $u_1$,..., $u_i$,..., $u_{Nb}$) in the second buffer ($v_1$, ..., $v_i$,..., $v_{Nb}$) of said component, and repeating the steps (ET1), (ET2), (ET3), (ET4) until the first buffer ($u_0$, $u_1$,..., $u_i$,..., $u_{Nb}$) is full again;
- (ET24b) if the second buffer ($v_1$, ..., $v_i$,..., $v_{Nb}$) of said component is not empty, forming the output buffer ($w_0$, $w_1$, ..., $w_i$, ..., $w_{Nb}$) by concatenating the first and second buffers of said component ($B2(0)$, $B2(1)$, ..., $B2(i)$,..., $B2(Nb)$) so that wi = [vi ui];

6. The method (100) according to any of claims 5, wherein the adaptation step (103) comprises the following steps of:

- (ET31) for each source buffer of the plurality of source buffers ($B3(0)$, $B3(1)$, ..., $B3(i)$,..., $B3(Nb)$), at each instant (n), backing up the corresponding sample e(n) of the input signal (e) in said source buffer ($B3(0)$, $B3(1)$,..., $B3(i)$,..., $B3(Nb)$), until said source buffer ($B3(0)$, $B3(1)$,..., $B3(i)$,..., $B3(Nb)$) is full;
- (ET32) for each source buffer of the plurality of source buffers ($B3(0)$, $B3(1)$, ..., $B3(i)$,..., $B3(Nb)$), creating a concatenated source buffer by concatenating virtual source samples having the same virtual source sample value with said source buffer ($B3(0)$, $B3(1)$, ..., $B3(i)$,..., $B3(Nb)$), so that a size of the concatenated source buffer is equal to twice the size of said source buffer ($B3(0)$, $B3(1)$, ..., $B3(i)$,..., $B3(Nb)$);

and wherein the calculation (ET33) of a frequency transform ($E_0, E_1, ..., E_i, ... E_{Nb}$) from said source buffer (B3(0), B3(1), ..., B3(i),..., B3(Nb)) is carried out from the concatenated source buffer created for each source buffer of the plurality of source buffers (B3(0), B3(1), ....., B3(i),..., B3(Nb)) .

7. The method (100) according to any one of the preceding claims, wherein the frequency transform is a Fourier transform.

8. A computer program comprising a set of instructions executable by a computer processor, the set of instructions being configured to implement the steps of the method according to any one of claims 1 to 7 when the set of instructions is executed by the computer processor.

9. A computer-readable medium, comprising a set of instructions executable by a computer processor, the set of instructions being configured to implement the steps of the method according to any one of claims 1 to 7, when the set of instructions is executed by the computer processor.

[Fig. 1]

[Fig. 2]

[Fig. 3]

$u(n)$

| B1[1] | B1[i] | B1[NB] |

$u(n-R_1)$    $u(n-R_i)$    $u(n-R_{Nb})$

| B2[0] | B2[1] | B2[i] | B2[NB] |

$U_i$

B4[i] $\Rightarrow \hat{F}_i \Rightarrow \Lambda$

$E_i$

| B3[0] | B3[1] | B3[i] | B3[NB] |

$e(n)$

[Fig. 4]

100

101

| 1011,1012, 1013, ET1, ET2, ET3 |

| 102 |

103

ET2

ET3

| ET21, ET22, ET23, ET24, ET24a, ET24b, ET24c, ET24d | | ET31, ET32, ET33 |

| ET4 |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* WO 9623384 A1

**Littérature non-brevet citée dans la description**

* **FRANK WEFERS**. *Partioned convolution algorithms for real-time auralization*